Europäisches Patentamt

European Patent Office

Office européen des brevets

(19)

(11) **EP 0 716 492 A1**

(12) **EUROPEAN PATENT APPLICATION**

(43) Date of publication:
   12.06.1996  Bulletin 1996/24

(51) Int. Cl.⁶: **H02H 7/085**

(21) Application number: 95308658.4

(22) Date of filing: 01.12.1995

(84) Designated Contracting States:
   **DE FR GB**

(30) Priority: 05.12.1994 JP 300485/94

(71) Applicant: **JIDOSHA DENKI KOGYO KABUSHIKI KAISHA**
   **Yokohama-city, Kanagawa-prefecture (JP)**

(72) Inventors:
   • **Funaki, Hiroyuki,**
    **c/o Jidoshi Denki Kogyo K.K.**
    **Yokohama-city, Kanagawa-pref. (JP)**
   • **Sekiguchi, Satoru,**
    **c/o Jidoshi Denki Kogyo K.K.**
    **Yokohama-city, Kanagawa-pref. (JP)**

(74) Representative: **Jenkins, Peter David et al**
   **PAGE WHITE & FARRER**
   **54 Doughty Street**
   **London WC1N 2LS (GB)**

(54) **Electric motor control device**

(57)    An electric motor control device is provided with operation switches, a motor current detection means and a controller for actuating an electric motor, the controller shuts off power supply to the electric motor at the time of detecting the electric motor to be locked by comparing variation of a load current flowing in the electric motor retroactively to the past with a comparable reference value predetermined individually.

**FIG.1**

EP 0 716 492 A1

## Description

This invention relates to an electric motor control device to be applied to an opening and closing mechanism such as a power window apparatus, a power sunroof apparatus and so on, which is possible to reverse the electric motor when something is pinched between the window glass (or roof lid) and the frame.

As an electric motor control device having a function to reverse the electric motor when something is pinched by the window glass or the like in the power window apparatus and the power sunroof apparatus, devices which are so designed as to detect increase of the electric current flowing in the electric motor (load current or motor current) have been known. Among them, two types of the devices are known ;

① an electric motor control device which is so designed as to reverse the electric motor when the motor current flowing in the electric motor exceeds the predetermined reference value,

② an electric motor control device which is so designed as to detect increase of the motor current flowing in the electric motor per unit time and reverse the electric motor when the detected increase of the motor current per unit time exceeds the predetermined reference value.

However, in the control device of type ①, the motor current flowing in the electric motor may exceeds the reference value even in the normal working if sliding resistance of the window glass or the sunroof lid is high, for example. Accordingly, there is a problem in that there is the possibility that the electric motor may be reversed independently of occurrence of the pinching.

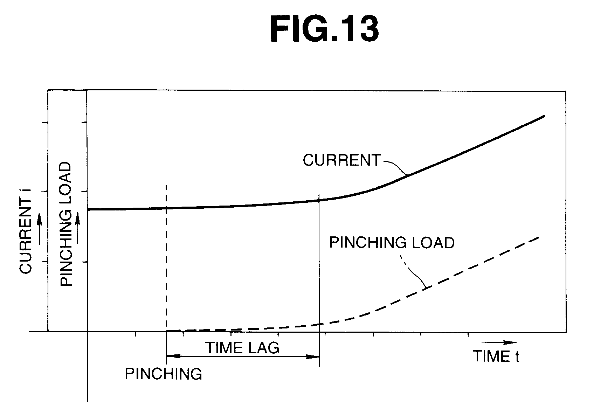

Furthermore, in the control device of the type ②, there is a tendency to generate a time lag in the increase of the current immediately after the occurrence of the pinching owing to the effect of the inertial force of the mechanical members, and the time lag is fluctuated by variation speed of load, that is by elastic force of the pinched substance as shown in FIG. 13. Accordingly, there is some difference in the current variation per unit time between the sharp increase of current in a case of pinching the hard substance and the slow increase of current in a case of pinching the soft substance in a case of estimating the pinching according to the variation of the electric current flowing in the electric motor in order to decrease pinching force, therefore there is a problem in that it is difficult to unify the pinching load applied on the pinched substance.

This invention is made in view of the above mentioned problems of the prior art, and it is an aim to provide an electric motor control device which is possible to make the pinching load regular whether sharp increase of motor current in a case of pinching the hard substance or slow increase of motor current in a case of pinching the soft substance.

In order to accomplish the above mentioned aim the electric motor control device according to this invention is characterized by comprising operation switches for generating command signals, a motor current detection means for detecting an electric current flowing in an electric motor, and a controller for supplying electric power to the electric motor in response to the respective command signals generated from the operation switches, and shutting off the power supply to the electric motor at the time of detecting the electric motor to be locked according to variation of the electric current detected through the motor current detection means, the controller deciding whether the electric motor is locked or not by comparing the current variation retroactively to the past with a comparable reference value predetermined individually.

In an electric motor control device according to a preferred embodiment, the controller is provided with a second current memory means for successively storing difference data between the most recent current datum and current data previously stored in the first current memory means, a, third current means stored with predetermined reference values to be compared with the difference data stored in the second current memory means, a comparison-decision means for repeatedly comparing the difference data stored in the second current memory means with the reference values stored in the third current memory means retroactively to the past in order until the difference datum exceeds the comparable reference value, and generating a reverse command signal when the difference datum exceeds the comparable reference value, and an output means connected electrically to the electric motor for supplying electric power to the electric motor in response to the respective command signals generated from the operation switches, and reversing the electric motor according to the reverse command signal generated from the comparison-decision means.

In an electric motor control device according to another preferred embodiment, the controller is further provided with an oscillation means for generating a timer output with a predetermined period, and the comparison-decision means compares the difference data with the reference values retroactively to the past in order each time the number of the timer outputs generated from the oscillation means exceeds a predetermined number.

In the electric motor control device according to this invention, the controller is provided with, for example, a memory for storing a plurality of current data detected at predetermined intervals in succession as defined in claim 2, and so designed as to detect the electric motor to be locked by comparing variation of an electric current flowing in the electric motor retroactively to the past with a comparable reference value predetermined against individual time.

Namely, in a case where the hard substance is pinched by the window glass or sunroof lid and the motor current (load current) increases steeply, decision is done that the electric motor is locked by comparing the current variation with a relatively small reference value and, in a case where the soft substance is pinched and the motor current increases slowly, decision of the motor locking is done by comparing the current variation with a relatively large reference value. Therefore, the load applied on the pinched substance becomes constant independently of the hardness of the pinched substance.

A preferred embodiment of the present invention will now be described hereinbelow by way of example only with reference to the accompanying drawings, in which:

FIG. 1 is a block diagram illustrating whole structure of the electric motor control device according to an embodiment of this invention ;
FIG. 2 is a block diagram illustrating construction of a microcomputer in the electric motor control device shown in FIG. 1 ;
FIG. 3 is a graph illustrating relationship between time and motor current for maintaining pinching load constant in the electric motor control device shown in FIG. 1 ;
FIGS. 4 to 6 are graphs illustrating relationship between time and motor current for explaining the control in the electric motor control device shown in FIG. 1 ; and
FIGS. 7 to 12 are flow charts illustrating the control program in the electric motor control device shown in FIG. 1.

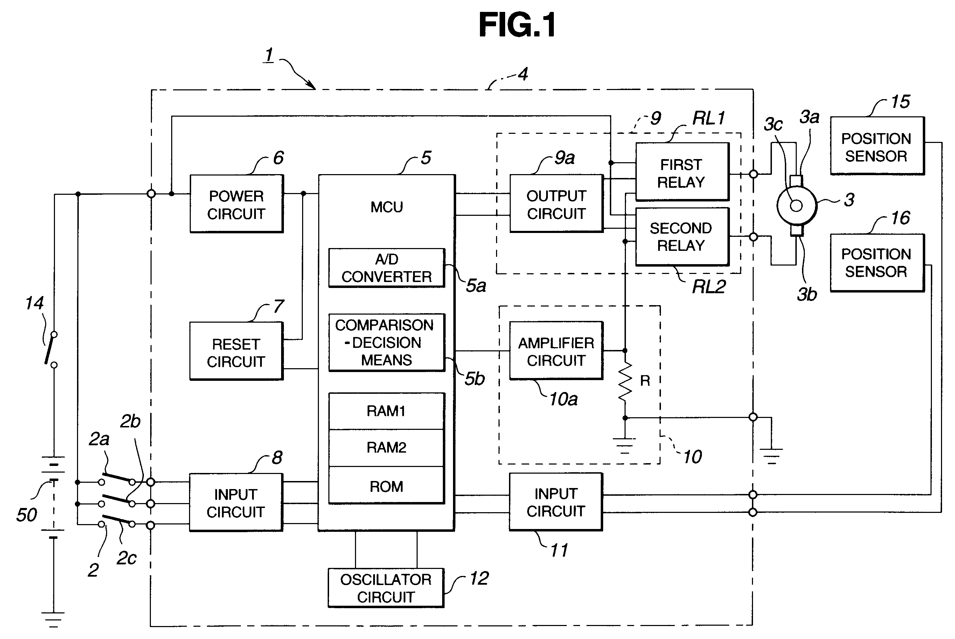

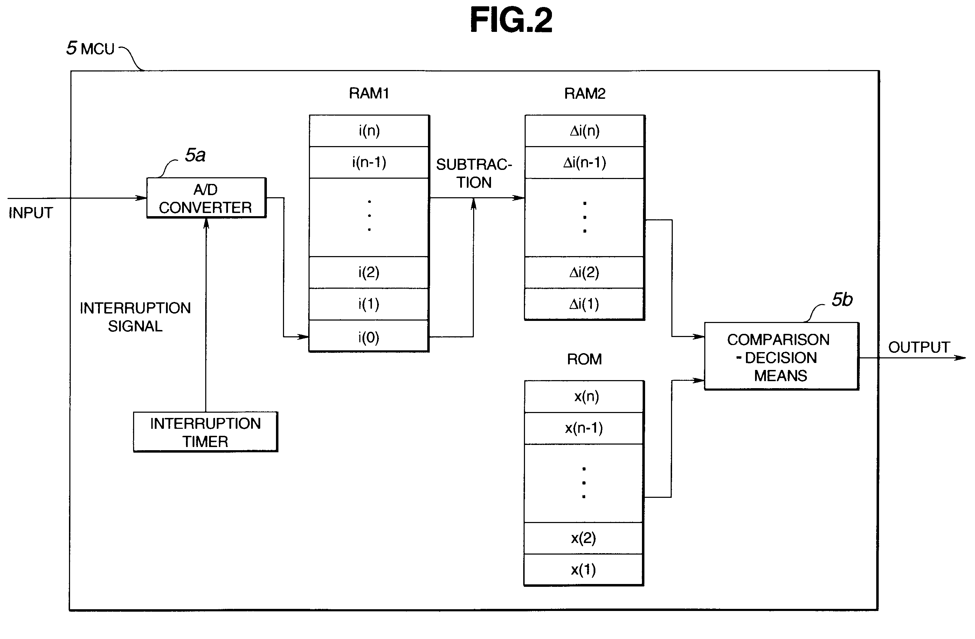

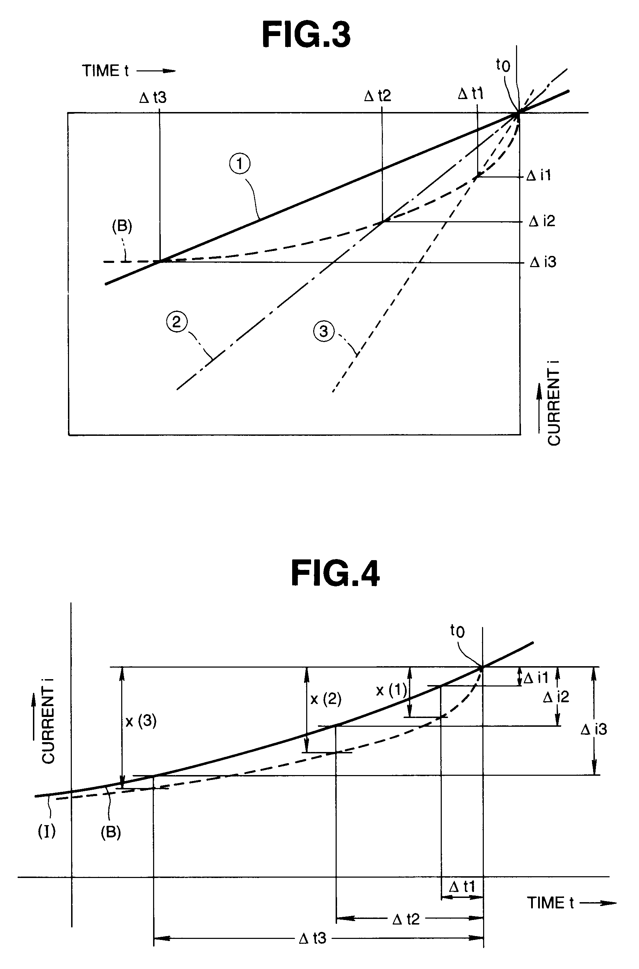

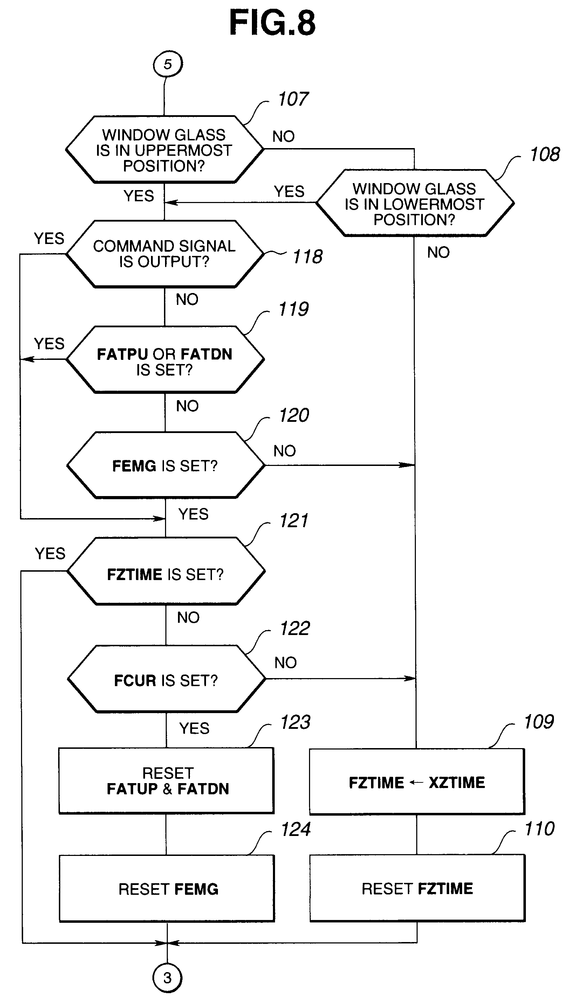

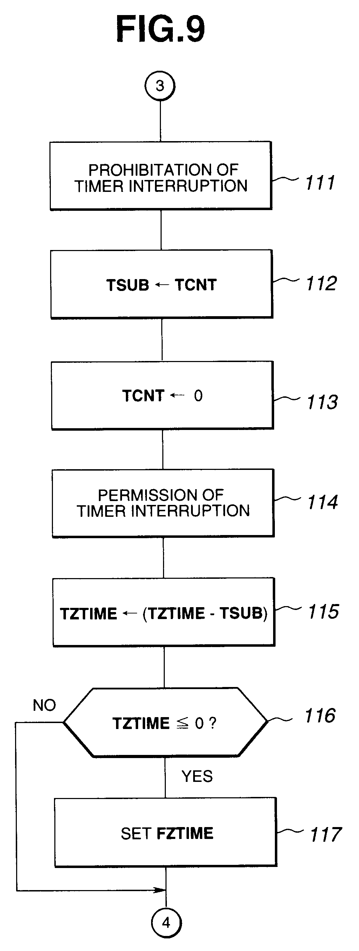

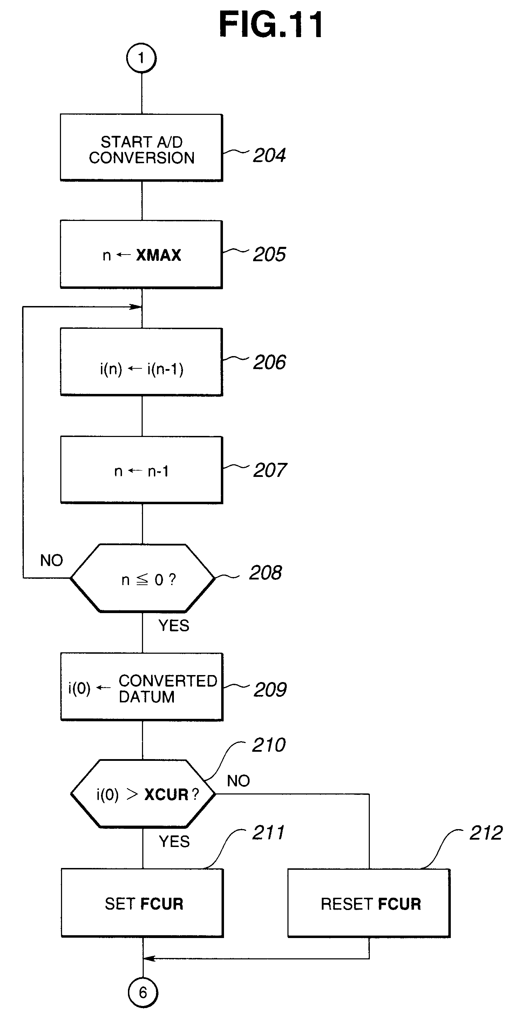

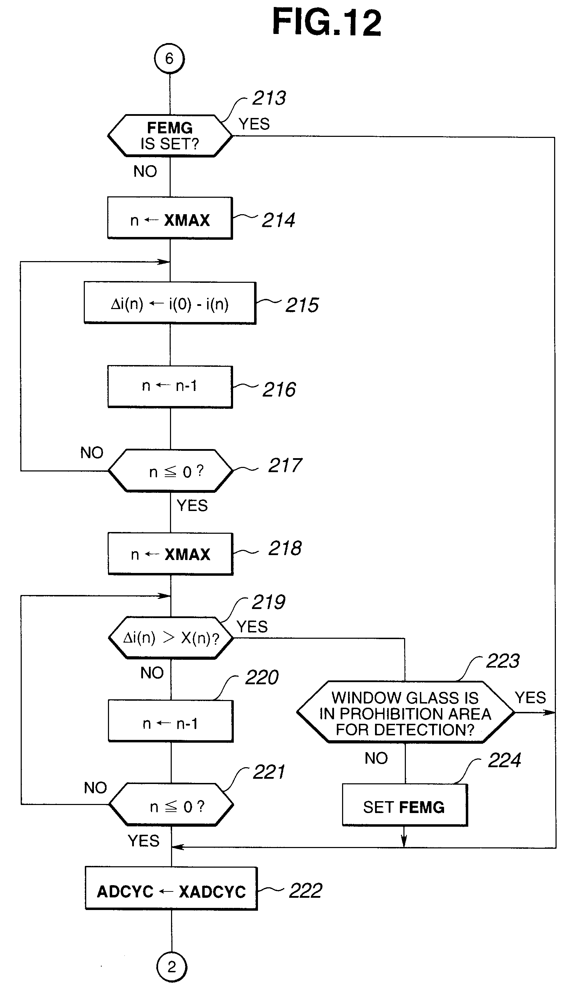

The electric motor control device according to an embodiment of this invention will be described below on basis of FIG. 1 to FIG. 12. FIG. 1 is a block diagram of the electric motor control device, FIG. 2 is a block diagram of a microcomputer in the control device shown in FIG. 1, and FIG. 3 is a graph showing relationship between time and motor current for maintaining pinching load constant in the control device shown in FIG. 1. FIG. 4, FIG. 5 and FIG. 6 are graphs showing relationship between time and motor current for explaining the control in the control device shown in FIG. 1, and FIGS. 7 to 12 are flow charts illustrating the control program in the electric motor control device shown in FIG. 1.

The electric motor control device 1 shown in FIG. 1 mainly comprises operation switches 2, and a controller 4, and incorporated into a power window apparatus.

The controller 4 is provided with a microcomputer (MCU) 5, a power circuit 6, a reset circuit 7, a first input circuit 8, an output means 9, a motor current detection means 10, a second input circuit 11, and an oscillator circuit 12. The microcomputer 5 is provided with a first current memory means RAM 1, a second current memory means RAM 2, a third current memory means ROM, a comparison-decision means 5b and an analog-digital (A/D) converter 5a as also shown in FIG. 2.

The operation switches 2 are disposed on an arm rest of the door on the driver's seat side or a center console, and provided with an up-switch (UP switch) 2a, a down-switch (DN switch) 2b and an auto-switch (AT switch) 2c.

The up-switch 2a generates an up-command signal for raising a window glass (for closing the window) according to ON-operation by the driver. The up-command signal generated in response to the ON-operation of the up-switch 2a is fed in the controller 4 and stored in a predetermined address of the microcomputer 5 after being replaced by the first input circuit 8 provided in the controller 4.

The down-switch 2b generates an down-command signal for letting down the window glass (opening the window) according to ON-operation by the driver. The down-command signal generated in response to the ON-operation of the down-switch 2b is fed in the controller 4 and stored in a predetermined address of the microcomputer 5 after being replaced by the first input circuit 8 of the controller 4.

The auto-switch 2c generates an auto-command signal for actuating the window glass continuously according to ON-operation together with the ON-operation of the up-switch 2a or the down-switch 2b. The auto-command signal generated in response to the ON-operation of the auto-switch 2c is fed in the controller 4 and stored in a predetermined address of the microcomputer 5 through the first input circuit 8 of the controller 4. The up-command signal or the down-command signal is maintained even after OFF-operation of the up-switch 2a or the down-witch 2b when the auto-command signal is generated according to the ON-operation of the auto-switch 2c at the same time of the ON-operation of the up-switch 2a or the down-switch 2b.

An electric motor 3 is provided with a brush terminal 3a connected to a first relay RL1 of the output means 9, which will be described later, and another brush terminal 3b connected to the second relay RL2 of the output means 9.

The electric motor 3 actuates the window glass in the opening direction through the forward rotation of an output shaft 3c when the brush terminals 3a and 3b are connected electrically to a power source 50 according to ON-working of the first relay RL1 of the output means 9. Contrary to this, the motor 3 actuates the window glass in the closing direction through the reverse rotation of the output shaft 3c when the brush terminals 3a and 3b are reversely connected to the power source 50 according to ON-working of the second relay RL2 of the output means 9.

In the controller 4, stabilized electric power is supplied to the microcomputer 5 through the power circuit 6 and the program is executed according to ON-operation of an ignition switch 14, and the microcomputer 5 is reset through the reset circuit 7 according to OFF-operation of the ignition switch 14.

The output means 9 in the controller 4 is composed of the first relay RL1, the second relay RL2 and an output circuit 9a.

The output means 9 actuates the first relay RL1 through the output circuit 9a according to a down-signal output from the microcomputer 5 and moves the window glass in the opening direction by the forward rotation of the output shaft 3c of the electric motor 3, and actuates the second relay RL2 through the output circuit 9a according to an up-signal output from the microcomputer 5 and moves the window glass in the closing direction by the reverse rotation of the output shaft 3c of the electric motor 3.

The motor current detection means 10 provided in the controller 4 has a detection resistor R and a amplifier circuit 10a. The detection resistor R is connected to the amplifier circuit 10a and the brush terminals 3a, 3b of the electric motor 3 through the first and second relays RL1 and RL2 in the output means 9 at one end thereof, and grounded at another end thereof, therefore an electric current flowing in the electric motor 3 during the rotation is converted into a voltage signal in low level. The voltage signal generated from the detection resistor R is amplified through the amplified circuit 10a, digitalized by the A/D converter 5a in the microcomputer 5 and fed into the first current memory means RAM1. The motor current detection means 10 always feeds the voltage signal amplified by the amplifier circuit 10a into the A/D converter 10a during the rotation of the electric motor 3.

The second input circuit 11 provided in the controller 4 is connected to two position sensors 15 and 16. The position sensor 15 is so designated as to generate an upper limit detection signal when the window glass arrives at the upper end position and the other position sensor 16 is so designated as to generate a lower limit detection signal when the window glass arrives at the lower end position, therefore the corresponding detection signal is fed to the microcomputer 5 when the window glass arrives at the upper or lower end position.

The oscillator circuit 12 provided in the controller 4 is a frequency synthesizer applied with a quartz oscillator and generates a timer output with a predetermined periodic time. The interruption routine of the program, which will be described later, is executed according to the timer output.

On the other side, the microcomputer 5 in the controller 4 is provided with the first current memory means RAM1, the second current memory means RAM2, the third current memory means ROM, the A/D converter 5a and the comparison-decision means 5b.

The first current memory means RAM1 in the microcomputer 5 is a random access memory and stored successively with (n+1) of current data i(0), i(1), i(2), · · · · · · i(n-1), i(n) fed from the motor current detection means 10 through the A/D converter 5a and corresponding to electric currents flowing in the electric motor 3 in the predetermined address every interruption routine of the program, as shown in FIG. 2. In this time, each of the stored current data is shifted to the next address and the oldest current datum is cleared in succession by storing the most recent current datum i(0).

The second current memory means RAM2 in the microcomputer 5 is a random access memory and stored successively with (n) of difference data $\Delta i(1)$, $\Delta i(2)$, · · · · · · $\Delta i(n-1)$, $\Delta i(n)$ in the predetermined address which correspond to results of subtracting the current data i(1), i(2), · · · · · · i(n-1), i(n) stored in the first current memory means RAM1 from the most recent current datum i(0) as shown in FIG. 2. Also in the second current memory means RAM2, the oldest difference datum is cleared in succession by being stored with the most recent difference datum $\Delta i(1)$. The difference datum $\Delta i(1)$ corresponds to the difference between the current datum i(0) and i(1). [ namely, $\Delta i(1) = i(0) - i(1)$ , $\Delta i(2) = i(0) - i(2)$ , · · · · · · $\Delta i(n-1) = i(0) - i(n-1)$ , $\Delta i(n) = i(0) - i(n)$ ]

The third current memory means ROM in the microcomputer 5 is a read only memory, and stored with (n) of predetermined reference values X(1), X(2), · · · · · · X(n-1), X(n) in the predetermined addresses. The reference values X(1) to X(n) stored in the third current memory means ROM are comparable to the difference data $\Delta i(1)$ to $\Delta i(n)$ stored in the second current memory means RAM2, respectively. Namely, X(1) is reference value comparable to $\Delta i(1)$, X(2) is reference value comparable to $\Delta i(2)$, and X(n) is reference value comparable to $\Delta i(n)$.

The comparison-decision means 5b in the microcomputer 5 compares the difference datum with the comparable reference value retroactively before the present time as much as predetermined time t1 from among the difference data $\Delta i(1)$ to $\Delta i(n)$ stored in the second current memory means RAM2 and the reference values X(1) to X(n) stored in the third current memory means ROM, and compares the difference datum with the comparable reference value further retroactively before the present time as much as predetermined time t2 longer than time t1 if the difference datum of time t1 ago does not exceed the comparable reference value. Furthermore, the comparison-decision means 5b compares the difference datum with the comparable reference value further retroactively before the present time as much as predetermined time t3 longer than time t2 if the difference datum of time t2 ago does not exceed the comparable reference value, further compares the difference datum with the reference value repeatedly in this manner until the difference datum exceeds the comparable reference value, and the comparison-decision means 5b generates a reverse command signal when the difference datum exceeds the comparable reference value.

Namely, in a case where something is pinched between the window glass and the window frame, the comparison-decision means 5b decides occurrence of the pinching in a short time when relatively hard substance is pinched, and decides the occurrence of the pinching for a long time when relatively soft substance is pinched between the window glass and the frame, therefore, the difference in pinching load applied on the pinched substance disappears between hard substance and soft substance.

The reverse command signal generated from the comparison-decision means 5b is fed into the output means 9 in order to cancel the up-command signal already stored in the predetermined address in the microcomputer 5 at that moment, thereby switching off the second relay RL2 and switching on the first relay RL1. Accordingly the output shaft 3c of the electric motor 3 is changed into the forward rotation from the reverse rotation, and the window glass is actuated changingly into the opening direction from the closing direction.

An explanation will be given in detail about the control in the comparison-decision means 5b on basis of FIGS. 3 to 5.

In FIG. 3, the line ① indicates ascension of an electric current flowing in the electric motor 3 at the time of pinching the relatively soft substance between the window glass and the window frame, the line ② indicates ascension of the electric current flowing in the motor 3 at the time of pinching the substance with medium hardness, and the line ③ indicates ascension of the electric current flowing in the motor 3 at the time of pinching the hard substance. The curve (B) is a correlation curve between motor current and time in order to maintain the pinching load constant, by comparing the time and the motor current corresponding to the correlation curve (B), it is seen that difference value of the motor current $\Delta i1$, $\Delta i2$ and $\Delta i3$ are obtained before the present time t0 as much as time t1, t2 and t3, respectively and it is necessary to compare the difference value and the reference value which are changing according to the hardness of the pinched substance respectively in order to make the pinching load constant regardless of the hardness of the pinched substance.

FIG. 4 is a graph for explaining the control in the comparison-decision means 5b in a case where occurrence of the pinching is not decided. In the drawing, the actual motor current curve (I) is compared with the correlation curve (B) between the time and the motor current when the pinching load applied on the pinched substance is maintained in constant.

Namely, first of all, difference value $\Delta i1$ at the time before the present time t0 as much as time $\Delta t1$ is compared with the comparable reference value X(1). Subsequently, difference value $\Delta i2$ at the time before the present time t0 as much as time $\Delta t2$ is compared with the comparable reference value X(2) since the difference value $\Delta i1$ is smaller than the reference value X(1), and difference value $\Delta i3$ at the time before the present time t0 as much as time $\Delta t3$ is successively compared with the comparable reference value X(3) because the difference value $\Delta i2$ is smaller than the reference value X(2) as shown in FIG. 4.

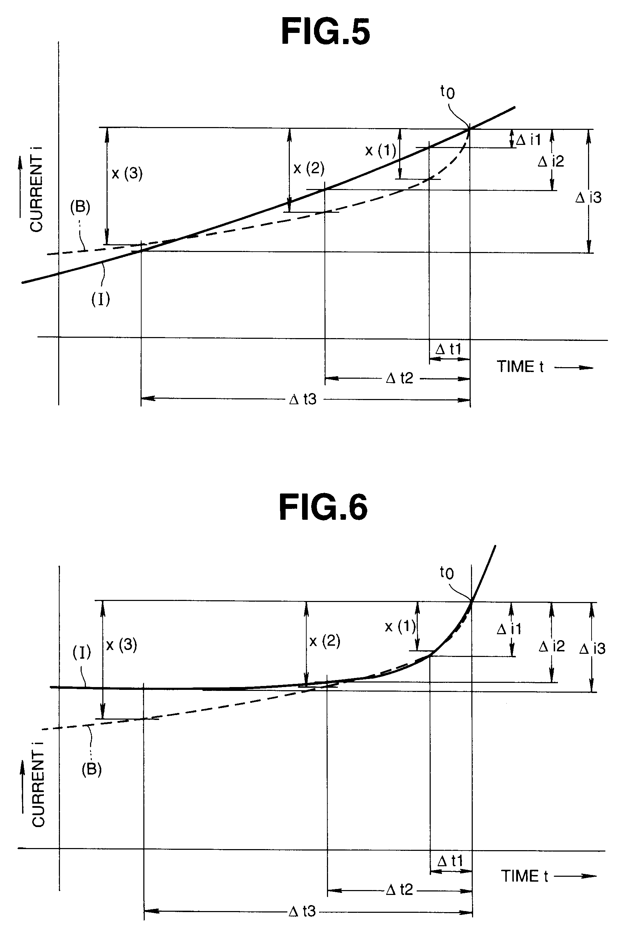

FIG. 5 is a graph for explaining the control in a case where the soft substance is pinched between the window glass and the window frame. In the drawing, the actual motor current curve (I) in the case of pinching the soft substance is compared with the correlation curve (B) between the time and the motor current when the pinching load is maintained in constant.

Namely, difference value $\Delta i1$ at the time before the present time t0 as much as time $\Delta t1$ is compared with the comparable reference value X(1), subsequently difference value $\Delta i2$ at the time before the present time t0 as much as time $\Delta t2$ is compared with the comparable reference value X(2) since the difference value $\Delta i1$ is smaller than the reference value X(1).

Successively, difference value $\Delta i3$ at the time before the present time t0 as much as time $\Delta t3$ is compared with the comparable reference value X(3) since the difference value $\Delta i2$ is smaller than reference value X(2). In this time, the comparison-decision means 5b decides occurrence of the pinching because the difference value $\Delta i3$ exceeds the comparable reference value X(3) as shown in FIG. 5 and generates the reverse command signal, thereby changing the rotation of the output shaft 3c of the electric motor 3 into the forward direction from the reverse direction and actuating the window glass in the opening direction.

FIG. 6 is a graph for explaining the control in the comparison-decision means 5b in a case where the hard substance is pinched between the window glass and the window frame. As shown in the drawing, the actual motor current curve (I) in the case of pinching the hard substance is compared with the correlation curve (B) between the time and the motor current when the pinching load is maintained in constant.

Namely, difference value $\Delta i1$ at the time before the present time t0 as much as time $\Delta t1$ is compared with the comparable reference value X(1), and the comparison-decision means 5b decides the occurrence of the pinching and generates the reverse command signal because the difference value $\Delta i1$ exceeds the comparable reference value X(1) as shown in FIG. 6. Whereby the rotation of the output shaft 3c of the electric motor 3 is changed into the forward direction from the reverse direction and the window glass is reversed into the opening direction.

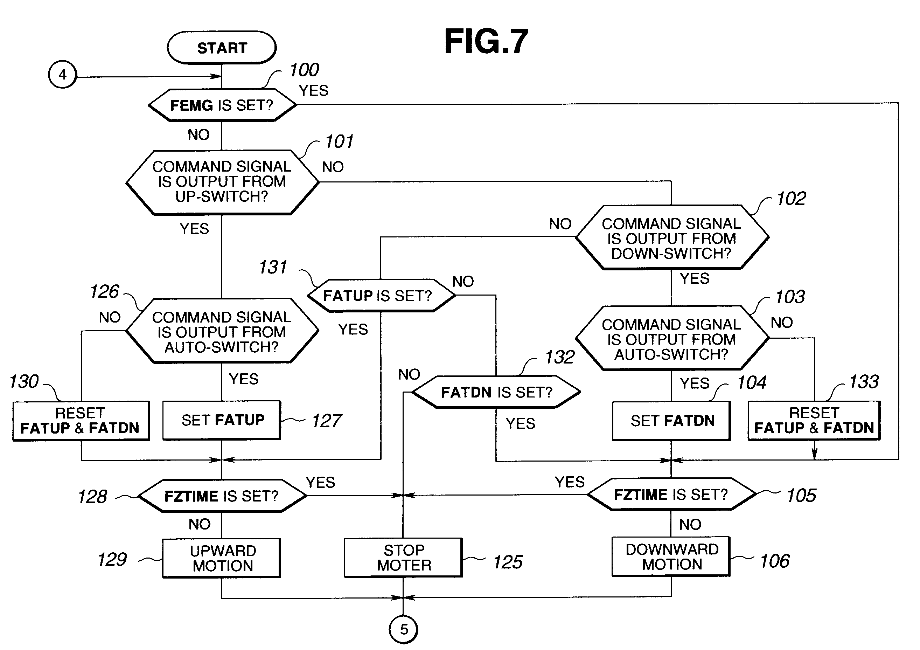

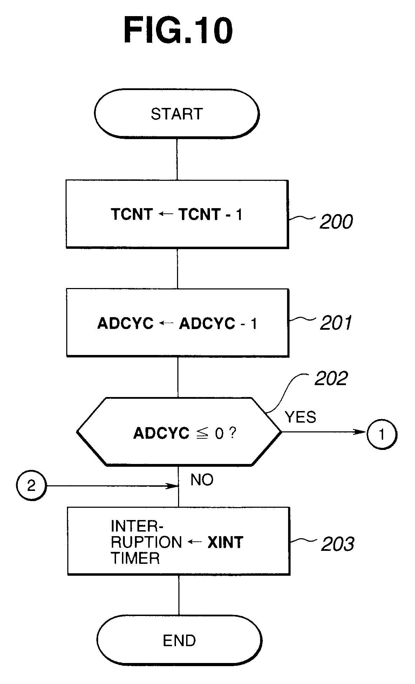

In the electric motor control device 1 having the aforementioned construction, the control is executed according to the program shown in FIGS. 7 to 12. Among them, FIGS. 7 to 9 show the main routine, and FIGS. 10 to 12 show interruption sub-routines.

In the program, "n" is a variable for memory appointment. i(n) show memory areas stored with detected motor current data successively. The most recent current value detected through the motor current detection means 10 is input in i(0), and $\Delta i(n)$ show memory areas stored with results of subtracting i(n) from i(0). Furthermore, X(n) is reference value for the comparison and decision.

With regard to timers in the program, ADCYC is a timer for setting frequency of comparison, and the comparison of the motor current is carried out once in every ADCYC times of timer interruption. TCNT is a passage timer for making a software timer by using the timer interruption, and incremented every timer interruption. TSUB is a passage timer for counting the time elapsed since software timer subtraction is carried out previously in the main routine, and fulfills function instead of TCNC since the value of TCNC may be changed in the software timer routine. TZTIME is a timer for counting time elapsed since the electric motor 3 is locked.

Concerning variables in the program, XZTIME is a set value of the timer TZTIME and means permissible time limit for the motor-locking. XMAX is the upper limit of memory shifting at the time of detecting the motor current. XCUR is electric current value for detecting the electric motor 3 to be locked at the uppermost or lowermost position of the window glass. XINT is a set value of the hardware timer and the timer interruption is carried out according to time up of this timer.

In regard to flags in the program, FEMG is a flag for recognizing the occurrence of pinching. FATUP and FATDN are flags for automatic upward motion and automatic downward motion, respectively. FCUR is a flag for recognizing that the electric motor 3 is locked at the uppermost or lowermost position of the window glass and the motor current exceeds the XCUR.

In the program, interruption generates when the initial set value given to the hardware timer is decremented at intervals of predetermined time and the set value becomes negative, and the interruption routine is executed.

Furthermore, in the program, the software timer is applied with the interruption routine, counts the number of repetitions of the interruption between timer routine and the next timer routine at the timer routine in the main routine at the time of repeating the main routine, and a time-up flag is set when set value determined separately in the main routine becomes not higher than zero by subtracting the counted time elapsed from the initially set value.

In the program, a overcurrent timer counts the permissible motor-locking time when the window glass arrives at the uppermost or lowermost position in order prevent the vehicle from a fire caused by overheat of the electric motor 3 when the operation switches 2 gets out of order, for example.

When there is a demand for the interruption while the timer interruption is forbidden in software routine, the interruption generates immediate after permission of the timer interruption.

According to the ON-operation of the ignition switch 14, electric power is supplied to the controller 4 and the control program is executed.

If the up-switch 2a of the operation switches 2 is switched on together with the auto-switch 2c when the window glass is in the lowermost end position, the up-command signal and the auto-command signal are generated and fed into the controller 4.

In the main routine, decision is done to be "NO" at step 100 and the control proceeds to step 101 since FEMG (pinching flag) in not set, and decision is done to be "YES" at step 101 since the up-switch 2a has been operated on and the control proceeds to step 126. At step 126, decision is done to be "YES" and the control proceeds to step 127 because the auto-switch 2c is switched on together with the up-switch 2a, and FATUP (auto-upward motion flag) is set at step 127, subsequently the control proceeds to step 128. Decision is done to be "NO" at step 128 and control proceeds to step 129 since FZTIME (time flag after motor-locking), and the window glass is moved in the upward direction (closing direction of the window) at step 129 by actuating the second relay RL2 and rotating the output shaft 3c of the electric motor 3 in the reverse rotational direction.

In this time, the window glass is moved continuously in the upward direction even after the up-switch 2a is switched off by releasing a finger from a push button of the up-switch 2a because the flag FATUP is set and the control is carried out through steps 101,102, 131, 128 and 129.

In a case of merely switching on the up-switch 2a without operating the auto-switch 2c, decision is done to be "NO" at step 126 and the control proceeds to step 128 after resetting the automatic motion flag (FATUP, FATDN). Accordingly, the window glass is stopped by OFF-operation of the up-switch 2a because the control is executed through steps 101, 102, 131, 132 and 125.

At step 107 after executing the process in step 129, decision is done to be "NO" and the control proceeds to step 108 since the window glass does not arrive at the uppermost position, subsequently decision is done to be "NO" at step 108 and the control proceeds to step 109 and step 110 since the window glass is not at the lowermost position. The control proceeds to step 111 after setting XZTIME (set value) in TZTIME (motor-locking time counter) at step 109 and resetting FZTIME (count-up flag) at step 110, the timer interruption is forbidden at step 111, TCNT (elapsed time counter) is set in TSUB (elapsed time counter) at step 112, the timer TCNT is cleared at step 113, the timer interruption is permitted at step 114, a result of subtracting TSUB from TZTIME is set in TZTIME at step 115, successively decision is done to be "NO" at step 116 and the control returns to step 100 since TZTIME is larger than zero.

The processes at steps 111, 112, 113 and 114 are executed in order to use the elapsed time of the interruption hardware in the timer routine, the count of the overcurrent timer is performed at steps 115, 116 and 117, and the flag FZTIME is set after the predetermined time at step 117.

While the main routine is executed and the window glass is actuated in the closing direction, timer signal is generated successively from the oscillator circuit 12 and the interruption routine is performed by interrupting the main routine.

When the interruption routine is executed, count down is carried out at step 200 in order to recognize the number of repetitions of the interruption, subsequently count down is carried out at step 201 for deciding wether comparison of the motor current is to be performed or not, and the control proceeds to step 202. At step 202, decision is done whether comparison and decision of the motor current is carried out or not, and the control proceeds to step 204 in order to compare the motor current with the reference value and decide the occurrence of pinching once in every ADCYC times of the timer interruption.

The A/D converter 5a starts feeding current data at step 204, XMAX (upper limit of memory shifting) is set as variable (n) for memory appointment at step 205. The control proceeds to step 206, one space is reserved in the memory areas at step 206 and the variable (n) is decreased by one at step 207, and decision is done to be "NO" at step 208, whereby the processes at steps 206,207 and 208 are carried out repeatedly until the variable (n) is decreased into zero in the decision at step 208. Namely the current data of (n) are stored in the first current memory means RAM1 by processing the steps 205, 206, 207 and 208.

The control proceeds to step 209 through step 208, and further proceeds to step 210 after taking the most recent current datum i(0) at step 209, and decision is done as to whether the most recent current datum i(0) is larger than XCUR or not at step 210. When the current datum i(0) is larger than XCUR, FCUR (locking current detection flag) is set at step 211, and if the most recent current datum i(0) is not larger than XCUR, the flag FCUR is reset at step 212 and then the control proceeds to step 213.

At step 213, decision is done as to whether FEMG (pinching flag) is set or not, the control proceeds to step 214 and XMAX is set as variable n for memory appointment since the flag FEMG is not set, the control proceeds to step 215. At step 215, difference data $\Delta i(n)$ is calculated by retracting the current data i(n) from the most recent current datum i(0), and the variable (n) is decreased by one at step 216 and the control proceeds to step 217. Decision is done to be "NO" at step 217, whereby the processes at steps 215, 216 and 217 are executed repeatedly until the variable (n) is decreased into zero in the decision at step 217. Accordingly, the difference data of (n) are stored in the second current memory means RAM2 by processing the steps 214, 215, 216 and 217.

The control proceeds to step 218, XMAX is set again as variable (n) for memory appointment at step 218, decision is done as to whether the difference datum $\Delta i(n)$ is larger than reference value X(n) or not at step 219, and the control proceeds to step 220 if the decision is done to be "NO" at step 219.

At step 220, the variable (n) is decreased by one, and decision is done as to whether the variable (n) is zero or smaller than zero at step 221, and the control returns to step 219 when the decision is done to be "NO" at step 221. Namely, when the difference datum is not larger than the comparable reference value, the comparison at step 219 is done retroactively to the previous data and repeated until the difference datum exceeds the comparable reference value. Therefore, the process at steps 219, 220 and 221 are repeated until the variable (n) is decreased into zero in a case where the pinching in not detected.

If something is pinched between the window glass and the window frame in a case of the window glass is moved in the closing direction, the difference datum $\Delta i(n)$ becomes larger than the comparable reference value X(n) and the control proceeds to step 223, and decision is done as to whether the window glass is in a prohibition area for pinching detection predetermined adjacent to the uppermost position of the window glass at step 223. When the window glass is not in the pohibition area, the flag FEMG is set at step 224 and the control proceeds to step 203 after setting again the cycle counter for the current comparison at step 222. The interruption routine is finished after setting again the interruption timer at step 203.

The comparison-decision means 5b compares the difference data $\Delta i(n)$ stored in the second current memory means RAM2 with the reference values X(n) stored in the third current memory means ROM and repeats the comparison retroactively to the past until the difference datum $\Delta i(n)$ [$\Delta i(1)$, $\Delta i(2)$, $\cdot\ \cdot\ \cdot\ \cdot\ \cdot\ \cdot$, $\Delta i(n)$] exceeds the comparable reference value X(n) [X(1), X(2), $\cdot\ \cdot\ \cdot\ \cdot\ \cdot\ \cdot$, X(n)] at steps 218, 219, 220 and 221. Then, the comparison-decision means 5b generates the reverse command signal and sets the flag FEMG when the difference datum $\Delta i(n)$ exceeds the comparable reference value X(n) at steps 223 and 224.

After the interruption, the control proceeds to step 100 and decision is done to be "YES" since the flag FEMG is set, the control proceeds to step 105. The flag FZTIME is decided not to be set ("NO") at step 105, and the control proceeds to step 106. The second relay RL2 is changed off and the first relay RL1 is worked according to the reverse command signal, thereby rotating the output shaft 3c of the electric motor 3 in the forward direction and moving the window glass reversely in the downward direction (opening direction) at step 106.

When the window glass is reversed in the opening direction and arrives at the lowermost position, decision is done to be "YES" at step 108 and the control proceeds to step 118 and further proceeds to step 121 irrespective of states of the operation switches 2 since the flag FEMG is set. At step 121, decision is done to be "NO" and the control proceeds to step 122 since the flag FZTIME is not set, and the control proceeds to step 123 after decision to be "YES" since the flag FCUR is set by the motor-locking. At step 123, the flags FATUP and FATDN are reset and the reversing control owing to the pinching is finished after resetting the flag FEMG at step 124.

If the window glass is moved in the closing direction according to the ON-operation of the up-switch 2a when there is nothing between the window glass and window frame, decision is done to be "NO" at step 100 and the control proceeds to step 101 since the flag FEMG is not set, and the control proceeds to step 128 after processing steps 126 and 130 since the up-switch 2a is operated. At step 128, decision is done to be "NO" since the flag FZTIME is not set, and the window glass is moved continuously in the closing (upward) direction.

Before long, when the window glass arrives at the uppermost position, the control proceeds to step 118 after decision to be "YES" at step 107 and further proceeds to step 121 since the up-switch is switched on. The control proceeds to step 122 since the flag FZTIME is not yet set in this time and further proceeds to steps 123 and 124 since the window glass is locked at the uppermost position and the flag FCUR is set. At steps 123 and 124, three of flags FATUP, FATDN and FEMG are reset, and such the state is maintained during the whole time the flag FCUR is set according to the motor-locking and the command signal is output from on of the switches.

If the ON-operation of the up-switch 2a is further continued, count value of the timer TZTIM subtracted successively at step 115 becomes not larger than zero, whereby the flag FTIME is set at 117.

When the flag FZTIME is set at step 117, decision is done to be "YES" at step 128 and the electric motor 3 is stopped at step 125. In this time, the flag FZTIME is not reset because the control proceeds to step 111 according to the decision at step 121 so far as the command signal is output from the switches. If the output from the switch disappears, the control proceeds to step 109 through steps 118, 119 and 120, and the timer TZTIME is set again with XZTIME at step 109, furthermore the flag FZTIME is reset at step 110.

As mentioned above, in the electric motor control device according to this invention, the controller is so designed as to detect the electric motor to be locked by comparing variation of the motor current flowing in the electric motor retroactively to the past with the comparable reference value predetermined individually, therefore the electric motor is decided to be locked by comparing the current variation with the small reference value in a case where the motor current increases sharply, and decided to be locked by comparing the currents variation with the large reference value in a case where the motor current increases slowly. Accordingly, it is possible to make the pinching load regular no matter whether the case of pinching a hard substance or the case of pinching a soft substance.

**Claims**

1.  An electric motor control device comprising :
    operation switches operable for generating command signals ;
    a motor current detection means for detecting an electric current flowing in an electric motor ; and
    a controller for supplying electric power to the electric motor in response to said respective command signals generated from the operation switches, and shutting off the power supply to said electric motor at the time of detecting said electric motor to be locked according to variation of the electric current detected through said motor current detection means ;
    said controller deciding whether the electric motor is locked or not by comparing the current variation retroactively to the past with a comparable reference value predetermined individually.

2.  An electric motor control device as set forth in claim 1, wherein said controller is provided with ;
    a first current memory means for successively storing current data detected through the motor current detection means at predetermined intervals ;
    a second current memory means for successively storing difference data between the most recent current datum and current data previously stored in the first current memory means ;
    a third current memory means stored with predetermined reference values to be compared with said difference data stored in the second current memory means ;
    a comparison-decision means for repeatedly comparing the difference data stored in said second current memory means with the reference values stored in said third current memory means retroactively to the past in order until the difference datum exceeds the comparable reference value, and generating a reverse command signal when the difference datum exceeds the comparable reference value ; and
    an output means connected electrically to said electric motor for supplying electric power to the electric motor in response to the respective command signals generated from the operation switches, and reversing said electric motor according to the reverse command signal generated from said comparison-decision means.

3.  An electric motor control device as set forth in claim 2, wherein
    said controller is further provided with an oscillation means for generating a timer output with a predetermined period ; and
    said comparison-decision means compares the difference data with the reference values retroactively to the past in order each time the number of said timer outputs generated from the oscillation means exceeds a predetermined number.

FIG.1

15 POSITION SENSOR

16 POSITION SENSOR

3
3a
3b
3c

RL1 — FIRST RELAY
RL2 — SECOND RELAY
9
9a OUTPUT CIRCUIT

10
R
AMPLIFIER CIRCUIT
10a

INPUT CIRCUIT
11

4

5 MCU
5a A/D CONVERTER
5b COMPARISON -DECISION MEANS
RAM1
RAM2
ROM

OSCILLATOR CIRCUIT
12

1

6 POWER CIRCUIT

7 RESET CIRCUIT

8 INPUT CIRCUIT

2a
2b
2c
2

14

50

# FIG.2

EP 0 716 492 A1

# FIG.3

# FIG.4

# FIG.5

# FIG.6

# FIG.7

EP 0 716 492 A1

# FIG.8

⑤

*107*

WINDOW GLASS IS IN UPPERMOST POSITION? — NO

*108*

YES → WINDOW GLASS IS IN LOWERMOST POSITION?

YES

YES ← COMMAND SIGNAL IS OUTPUT? ~ *118*

NO ← (108) NO

NO

YES ← **FATPU** OR **FATDN** IS SET? *119*

NO

**FEMG** IS SET? — NO → *120*

YES

YES ← **FZTIME** IS SET? *121*

NO

**FCUR** IS SET? — NO → *122*

YES

*123*

RESET **FATUP & FATDN**

*109*

**FZTIME ← XZTIME**

*124*

RESET **FEMG**

*110*

RESET **FZTIME**

③

# FIG.9

```
        ( 3 )
          |
┌─────────────────────┐
│   PROHIBITION OF     │─── 111
│  TIMER INTERRUPTION  │
└─────────────────────┘
          |
┌─────────────────────┐
│    TSUB ← TCNT       │─── 112
└─────────────────────┘
          |
┌─────────────────────┐
│    TCNT ← 0          │─── 113
└─────────────────────┘
          |
┌─────────────────────┐
│   PERMISSION OF      │─── 114
│  TIMER INTERRUPTION  │
└─────────────────────┘
          |
┌───────────────────────────┐
│ TZTIME ← (TZTIME - TSUB)   │─── 115
└───────────────────────────┘
          |
    NO ╱─────────────╲
   ◁──│  TZTIME ≦ 0 ? │─── 116
      ╲─────────────╱
          | YES
┌─────────────────────┐
│    SET FZTIME        │─── 117
└─────────────────────┘
          |
        ( 4 )
```

# FIG.10

```
          ┌─────────────┐
          │    START    │
          └──────┬──────┘
                 │
      ┌──────────┴──────────┐
      │   TCNT ← TCNT - 1   │ ～ 200
      └──────────┬──────────┘
                 │
      ┌──────────┴──────────┐
      │  ADCYC ← ADCYC - 1  │ ～ 201
      └──────────┬──────────┘
                 │              ～ 202
          ╱──────┴──────╲      YES
         ⟨  ADCYC ≤ 0 ?  ⟩ ─────────→ (1)
          ╲──────┬──────╱
                 │ NO
   (2) ─────────→│
      ┌──────────┴──────────┐
      │ INTER-              │
      │ RUPTION ← XINT      │ ～ 203
      │ TIMER               │
      └──────────┬──────────┘
                 │
          ┌──────┴──────┐
          │     END     │
          └─────────────┘
```

# FIG.11

```
          (1)
           │
  ┌─────────────────┐
  │     START A/D    │ ~ 204
  │    CONVERSION    │
  └─────────────────┘
           │
  ┌─────────────────┐
  │    n ← XMAX      │ ~ 205
  └─────────────────┘
           │
           ▼
  ┌─────────────────┐
  │  i(n) ← i(n-1)   │ ~ 206
  └─────────────────┘
           │
  ┌─────────────────┐
  │    n ← n-1       │ ~ 207
  └─────────────────┘
           │
     NO    ▼
  ◁──────< n ≦ 0 ? > ~ 208
           │
          YES
           │
  ┌─────────────────┐
  │ i(0) ← CONVERTED │ ~ 209
  │        DATUM     │
  └─────────────────┘
           │         ~ 210
           ▼         NO
    < i(0) > XCUR? >──────┐
           │              │
          YES             │
  ~ 211                ~ 212
  ┌─────────────┐   ┌─────────────┐
  │  SET FCUR   │   │ RESET FCUR  │
  └─────────────┘   └─────────────┘
           │              │
           ◀──────────────┘
           │
          (6)
```

# FIG.12

⑥

213 — **FEMG** IS SET?  →  YES

NO

214 — n ← **XMAX**

215 — $\Delta i(n) \leftarrow i(0) - i(n)$

216 — n ← n-1

217 — n ≦ 0 ?    NO

YES

218 — n ← **XMAX**

219 — $\Delta i(n) > X(n)?$    YES

NO

220 — n ← n-1

221 — n ≦ 0 ?    NO

YES

223 — WINDOW GLASS IS IN PROHIBITION AREA FOR DETECTION?    YES

NO

224 — SET **FEMG**

222 — **ADCYC ← XADCYC**

②

# FIG.13

EP 0 716 492 A1

| | European Patent Office | EUROPEAN SEARCH REPORT | Application Number EP 95 30 8658 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | US-A-5 334 876 (WASHELESKI JOHN  ET AL) 2 August 1994 | 1 | H02H7/085 |
| Y | * column 6, line 12 - line 63; figure 1 * | 2,3 | |
| | --- | | |
| Y | DE-A-44 01 463 (JIDOSHA DENKI KOGYO KK) 28 July 1994 | 2,3 | |
| A | * column 7, line 38 - column 8, line 47; figure 1 * | 1 | |
| | ----- | | |
| | | | **TECHNICAL FIELDS SEARCHED** (Int.Cl.6) |
| | | | H02H |

The present search report has been drawn up for all claims

| Place of search | Date of completion of the search | Examiner |
|---|---|---|
| THE HAGUE | 12 March 1996 | Salm, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)